# EUROPEAN PATENT SPECIFICATION

(11) **EP 1 591 004 B1**
(45) Date of publication and mention of the grant of the patent: **22.11.2006**
(21) Application number: 04252515.4
(22) Date of filing: 29.04.2004
(51) Int. Cl.: A01F 15/07

(54) **Round baler**
Rundballenpresse
Presse à balles rondes

(43) Date of publication of application: 02.11.2005
(73) Proprietor: Kverneland ASA, 4344 Kverneland (NO)
(72) Inventor: Tenbult, Henricus Theodorus Hubertus, 5531 KL Blade (NL)
(74) Representative: Orr, William McLean

(56) References cited:
- EP-A- 0 152 085
- EP-A- 0 510 499
- US-A- 4 266 390
- US-A- 6 094 899

## Description

This invention relates to a baler for forming a cylindrical bale of agricultural crop material.

Balers for forming cylindrical bales of agricultural crop material are well known, and such bales are usually referred to as "round" bales. The baler has a bale-forming chamber, means for feeding crop material into the chamber, and an endless belt arrangement (apron) and possibly a series of circumferentially spaced rollers which define a part-cylindrical surface of the chamber and within which a cylindrical bale can be formed. As is well known in the art, balers can be of the "fixed chamber" or "variable chamber type", and the present invention is applicable to both types.

Further, the invention is concerned with a baler of the type having an apron formed by at least one endless belt which is arranged to define a part-cylindrical surface of the chamber and within which a cylindrical bale can be formed.

The bale-forming chamber is therefore formed partly by the apron, which is formed by at least one endless belt, and also by an opposed pair of side surfaces which co-operate with the apron to define the bale-forming chamber, with each side surface facing a respective circular end face of the bale as it is formed.

A guide path is provided for the endless belt which include at least two guide rollers arranged to be substantially shielded from the chamber by the belt, i.e. the two guide rollers are located internally of the apron, in the sense of being located internally of the endless guide path along which the endless belt is guided.

It is an inevitable technical problem with existing balers that, from time to time, some of the material which is being fed into the chamber becomes entangled with, or wraps itself around or otherwise attaches to some of the guide rollers which define the endless path for the belt. Also, some of this material also collects loosely in the internal space, enclosed by the path of travel of the endless belt (apron).

It is therefore known to provide scraping devices to scrape off material which becomes attached to the rollers on which the belt-apron(s) are running. The scraped-off or otherwise collected material can be caused to leave the insides of the belts, by providing one of the three different types of device as set out below:
1. According to EPA 745319, the material is removed between the openings between two side-by-side running belts;
2. As taught by EPA 201898, EPA 0152085 or EPA 0510499, material is transported sideways, leaving the belts at positions where the belts do not run side-by-side.
3. It is known from EPA 510499 to arrange for the material to leave the insides of the belts through side panel.

A disadvantage of the known arrangements is that the material which is scraped-off and leaves the belts falls onto the ground, and is therefore spoiled or the material that is leaving falls onto the pick-up device, or is lead otherwise onto it, and therefore the material has to travel a long way, with risk of material building up and risk of blockages. Also, other devices present might block the way between the belt outlet and the pick-up device. A disadvantage of leading the material through the side wall is spoilage, or the long and complicated route to the pick-up device, causing the risk of blockage along this route. Also, in case of material which accumulates in the internal space of the apron and leaves this space suffers from the same disadvantages.

According to the invention there is provided a baler as defined in Claim 1.

Preferred features of the baler of the invention are set out in dependent Claims 2 to 14.

In a particularly preferred embodiment, the bale-forming chamber is defined by one or more apron consisting of an endless belt, or set of side-by-side arranged endless belts, running over at least two rollers; the chamber is also defined by two opposed side walls, and preferably also alongside the circumference of the compressed bale are provided one or more compression rollers.

Material to be fed to the chamber may be picked-up by a pick-up device and, if available, such material may also be chopped-up prior to being fed into the chamber. Upon entry into the chamber, the material is compressed against the apron, and also against the preferred additional compression rollers. When the baler has reached a desired compression and/or a desired diameter, the cylindrical shape of the bale is maintained by applying twine or netting around the cylindrical surface of the bale, to maintain the compression of the bale. The bale is then ejected by opening a tailgate.

Accordingly, in an embodiment of baler according to the invention, scraped-off material can be led into a channel or duct in a side plate, thereby communicating the material (scraped-off from internally of the belts) with the bale chamber. When the material comes into the vicinity of the top end of the bale, the rotation of the bale is such as to pull the scraped-off material (by frictional contact) out of the channel and into the bale chamber. Therefore, there is no risk of spoilage of the material, in that there is direct transfer of the scraped-off material into the bale chamber, and also no risk of blockage.

Preferably, the outlet end of the channel where it opens into the bale chamber is wedge shaped (and preferably in the turning sense of the turning top end of the bale) to support the pulling of the material into the bale chamber via frictional contact with the turning upper end of the bale. Alternatively, the wedge is formed by the circumferential surface of a cylindrical or conical roller, having a surface which runs at the same turning speed and/or the same turning sense as the top end of the co-operating top end of the bale. In addition, the roller can be power driven. This is to support the transfer of material into the bale chamber.

The material scraped-off the roller is preferably transported in a direction transversely of the direction of travel of the baler, i.e. generally parallel to the axis of the roller. This may be by employing a conveyor as disclosed in EPA 510499, EPA 201898, or by other means.

A preferred embodiment of baler according to the invention will now be described in detail, by way of example only, with reference to the accompanying drawings, in which:
Figure 1 is a detailed perspective view showing direction reversal of an arrangement of endless belts arranged side-by-side to form an "apron", which defines a part-cylindrical surface of a bale-forming chamber;
Figure 2 is a plan view corresponding to Figure 1;
Figure 3 is a schematic side view of an entire baler incorporating a novel arrangement of scraper device (to remove crop material which may become attached to at least one of the guide rollers defining the endless path for the belts); and
Figure 4 is a schematic detail view showing in more detail how scraped-off material is returned to the bale-forming chamber.

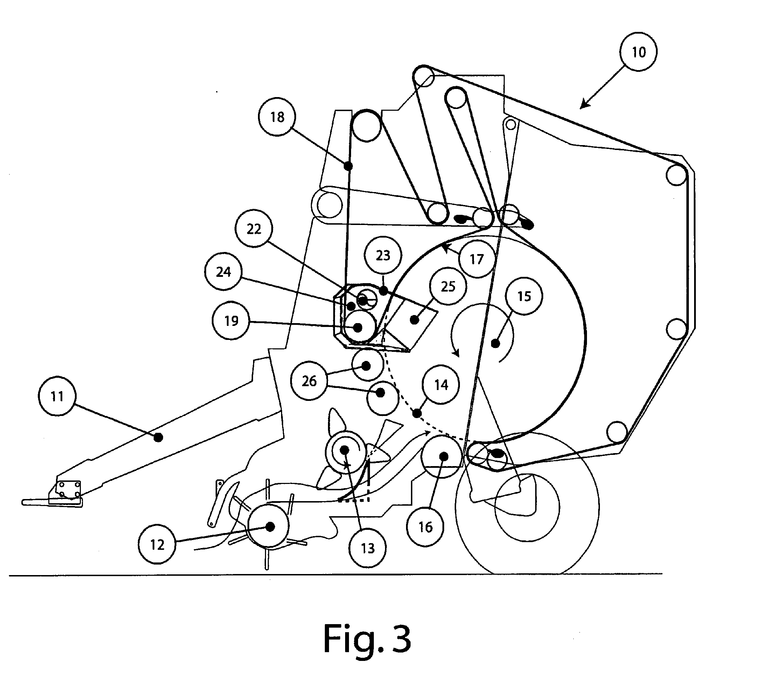

Referring now to the drawings, a baler according to the invention is designated generally by reference 10, and as shown in Figure 3 is a wheeled trailed machine intended to be towed behind a tractor or other propelling vehicle via towbar 11. The baler will normally pick-up crop material which has already been cut or mown, and which is lying on the ground. A pick-up device 12 picks up the crop material, and feeds it to a rotary feeding device 13, which is preferably also a chopping device, and the chopped material is then fed to an inlet 14 to a bale-forming chamber 15 as shown by the arrow 16.

An apron 17 is formed by at least one endless belt, and which is arranged to define a part-cylindrical surface of the chamber 15 and within which a progressively increasing size of cylindrical bale can be formed, in the case of a variable chamber type baler. The invention is, however, also applicable to a fixed chamber type of baler, although no detailed example is disclosed herein.

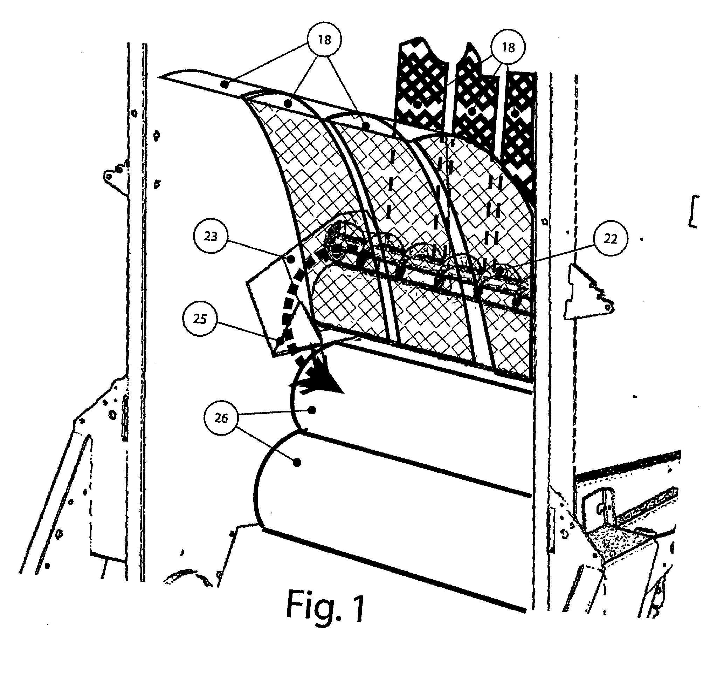

As can be seen in Figure 1, a number of separate endless belts 18 are arranged side-by-side, and follow a usual path of travel, as shown in Figure 3, passing over a series of guide rollers. Particular attention should be given to guide roller 19, which applies motion reversal substantially to the belts 18, and such a roller is particularly susceptible to crop material migrating to it and becoming wrapped around the roller, or otherwise attached to it. It will be noted that guide roller 19 is located internally of the endless path defined by the belts 18, i.e. internally of the apron. In other words, roller 19 is shielded from direct contact with the material in the chamber 15 by the belts themselves.

As will be described in more detail below, the preferred embodiment of the invention provides a unique arrangement of scraper device, and co-operating guide passage, to remove any crop material which becomes wound on or attached to one of the rollers e.g. roller 19, of the endless belts, and provides a guide passage which receives the material scraped-off by the scraper device and guides such material into the bale-forming chamber 15.

The bale-forming chamber 15 is defined partly by the part cylindrical surface defined by the movement of the endless belts 18, but also by a pair of opposed side surfaces each facing a respective circular end face of the bale as it is formed. One of the side surfaces is formed by a side face 20 of a housing of the baler designated generally by reference 21.

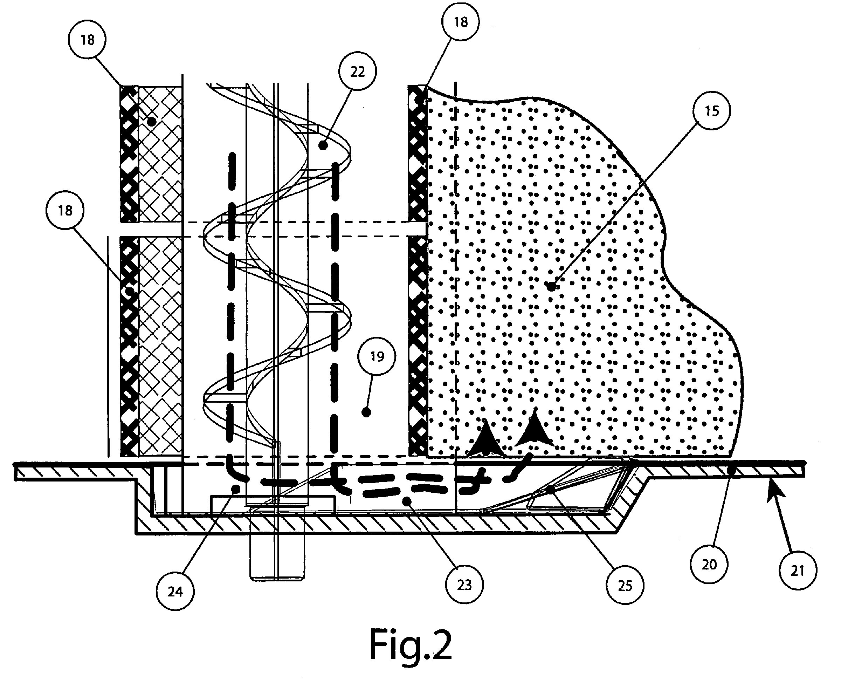

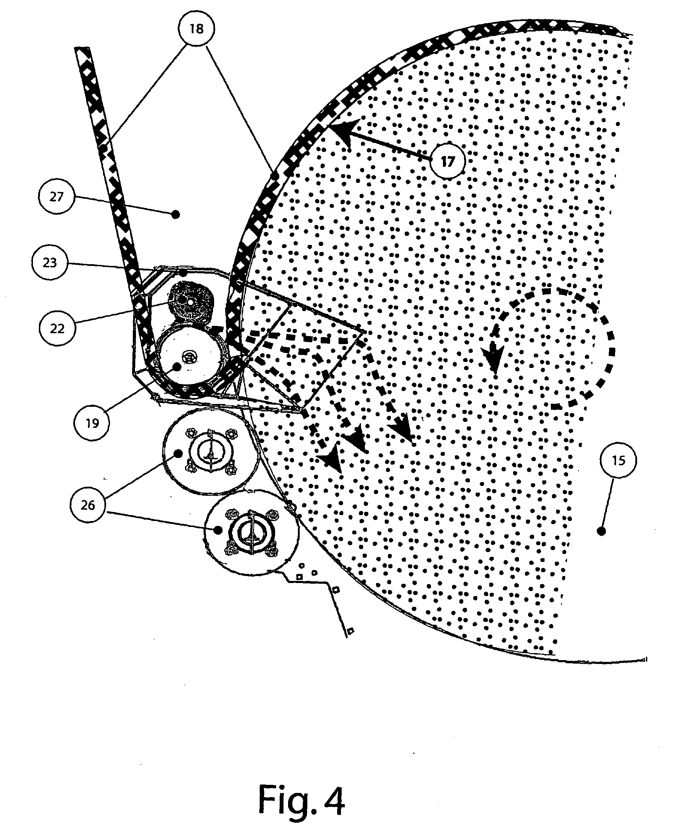

A scraper device is therefore arranged to scrape-off any crop material which becomes attached to roller 19, and in the illustrated embodiment takes the form of a flighted auger type conveyor 22. The cooperation between the cylindrical surface of roller 19 and the auger 22 can be seen also in Figures 1, 2 and 4, as well as schematically in Figure 3.

A guide passage, as referred to above, is arranged to receive material scraped-off by the auger 22, and to guide such material into the bale-forming chamber. In the illustrated and preferred embodiment, the guide passage is formed by a channel or duct 23 located at or in the end surface 20, and which guides scraped-off material from one axial end of the auger 22 (the auger 22 moves the material transversely and generally parallel to the axis of the roller 19), and the material then is guided rearwardly from its inlet end 24 adjacent to the auger 22, to an outlet end 25 via which the material is led into the chamber 15, in an upper portion thereof. The rotating mass of material forming the bale makes frictional contact with the scraped-off material as it moves along the channel 23, and this promotes pulling action on the scraped-off material.

The outlet end 25 of the channel 23 is therefore wedge shaped, and preferably in the turning sense of the turning upper end of the bale, to support the pulling of the material into the bale chamber. Alternatively, the "wedge" may be formed by the circumferential surface of a cylindrical or conical roller, such surface running at the same turning speed and/or in the same turning sense as the upper end of the cooperating upper end of the bale. In addition, the roller can be power driven, in order to support the transfer of material into the bale chamber.

The preferred embodiment of the invention therefore provides a unique arrangement of scraper device to remove material attaching itself to one of the guide rollers of the endless guide path for the belt(s), plus a unique cooperating guide passage to lead the scraped-off material directly into the bale-forming chamber, thereby minimising risk of spoilage. It should be understood that the preferred embodiment shows the scraper device associated with guide roller 19, but it should be understood that the invention may be applied to other guide rollers, and that more than one guide roller may have its own associated scraper device.

At least one compression roller 26 is arranged adjacent to the outer periphery of the bale-forming chamber 15, in a region circumferentially spaced from the apron 17 and engageable directly with the outer periphery of the bale as it is being formed in the chamber.

According to a further embodiment of the invention, the scraper device (auger 22) may be omitted, but the guide passage (channel 23) remains and in operation can serve to feed any material which accumulates in the internal space 27 (defined internally of the path of travel of the endless belts 18) to the bale-forming chamber 15. This material is pulled and/or drawn-in by suction through the channel inlet 24 and moves along the channel 23 before entering the bale-forming chamber 15 via the channel outlet 25. This movement of the material may be generated and/or assisted by the pulling action of the rotating mass of the bale as it is being formed.

## Claims

1. A baler (10) for forming a cylindrical bale of agricultural crop material and comprising;
a bale-forming chamber (15);
a feed inlet (14) to the chamber (15);
means (12, 13) for feeding crop material to the inlet (14) and into the chamber (15);
an apron (17) formed by at least one endless belt (18) which is arranged to define a part-cylindrical surface of the chamber (15) and within which cylindrical bale can be formed;
a guide path for the endless belt (18) which includes at least one guide roller (19) arranged to be substantially shielded from the chamber (15) by the belt (18), said guide path defining an internal space (27) in which material may accumulate; and
opposed side surfaces (20) for cooperating with the apron (17) to define the bale-forming chamber (15) and each surface (20) facing a respective circular end face of the bale as it is formed;
**characterised in that** a guide passage (23) is arranged to receive material which accumulates in said internal space (27) and to guide such material into the bale-forming chamber (15).

2. A baler according to Claim 1, **characterised in that** the guide passage is formed by a channel (23) provided in one of the side surfaces (20) of the bale-forming chamber (15).

3. A baler according to Claim 2, **characterised in that** the channel (23) has an inlet end (24) arranged internally of the path of travel followed by the endless belt (18), and an outlet end (25) communicating with the chamber (15).

4. A baler according to Claim 3, **characterised in that** the outlet end (25) of the channel (23) is wedge-shaped so as to assist material in the channel (23) being pulled by the rotating mass of material in the chamber (15).

5. A baler according to Claim 4, **characterised in that** the wedge shape of the outlet end (25) of the channel (23) is in the turning direction of the bale.

6. A baler according to Claim 4 or 5, **characterised in that** the wedge is formed by the circumferential side of a conical or cylindrical roll having a surface which runs in the same sense and/or speed as the cooperating upper end of the bale, as the latter is formed.

7. A baler according to any one of the preceding claims, **characterised by** a scraper device (22) arranged to scrape-off any crop material which becomes wound-on or attached to said one guide roller (19), and to feed such material to said guide passage 23.

8. A baler according to any one of the preceding claims, **characterised in that** a conveying means (22) is arranged internally of the endless path of the apron (17) and is operative to feed scraped-off material in a transverse direction generally parallel to the axis of said one roller (19).

9. A baler according to Claim 8, **characterised in that** the conveyor means (22) comprises an auger.

10. A baler according to Claim 9, **characterised in that** the auger (22) is arranged alongside and generally parallel to said one guide roller (19) and is operative to function as said scraper device and also to feed the scraped-off material in said transverse direction.

11. A baler according to Claim 6, **characterised in that** said roll is a power driven roller.

12. A baler according to any one of the preceding claims, **characterised in that** said feeding means comprises a pick-up device (12) for picking up crop material lying on the ground.

13. A baler according to Claim 12, **characterised in that** the feeding means also includes a rotary chopper device (13).

14. A baler according to any one of the preceding claims, **characterised by** at least one compression roller (26) arranged adjacent to the outer periphery of the bale-forming chamber (15), in a region circumferentially spaced from the apron (17), and engageable directly with the outer periphery of the bale being formed in the chamber (15).

## Patentansprüche

1. Ballenpresse (10) zum Ausbilden eines zylindrischen Ballens aus agrarwirtschaftlichem Erntematerial, umfassend;
eine Ballenformgebungskammer (15);
einen Zuführungseinlass (14) zu der Kammer (15);
Mittel (12, 13) zum Zuführen von Erntematerial zu dem Einlass (14) und in die Kammer (15);
eine aus mindestens einem Endlosband (18) ausgebildete Schürze (17), welche angeordnet ist, eine teilzylindrische Oberfläche der Kammer (15) zu definieren, und innerhalb welcher ein zylindrischer Ballen ausgebildet werden kann;
einen Führungsweg für das Endlosband (18), welcher mindestens eine Führungsrolle (19) aufweist, welche angeordnet ist, um im Wesentlichen durch das Band (18) von der Kammer (15) abgeschirmt zu sein, wobei der Führungsweg einen Innenraum (27) definiert, in welchem sich Material ansammeln kann; und
gegenüberliegende Seitenoberflächen (20) zum Zusammenarbeiten mit der Schürze (17), um die ballenausbildende Kammer (15) zu definieren, und wobei jede Oberfläche (20) gegenüber einer entsprechenden kreisförmigen Endfläche des Ballens, während er ausgebildet wird, liegt;
**dadurch gekennzeichnet, dass** ein Führungsdurchgang (23) angeordnet ist, um Material, welches sich in dem Innenraum (27) ansammelt, aufzunehmen und um derartiges Material in die Ballenformgebungskammer (15) zu führen.

2. Ballenpresse nach Anspruch 1, **dadurch gekennzeichnet, dass** der Führungsdurchgang durch einen Kanal (23), welcher in einer der Seitenoberflächen (20) der Ballenformgebungskammer (15) vorgesehen ist, ausgebildet ist.

3. Ballenpresse nach Anspruch 2, **dadurch gekennzeichnet, dass** der Kanal (23) ein Einlassende (24), welches innerhalb des Bewegungspfades, dem das Endlosband (18) folgt, angeordnet ist, und ein Auslassende (25), welches in Verbindung mit der Kammer (15) ist, aufweist.

4. Ballenpresse nach Anspruch 3, **dadurch gekennzeichnet, dass** das Auslassende (25) des Kanals (23) keilförmig ist, um ein Ziehen eines Materials in den Kanal (23) durch die drehende Materialmenge in der Kammer (15) zu unterstützen.

5. Ballenpresse nach Anspruch 4, **dadurch gekennzeichnet, dass** die Keilform des Auslassendes (25) des Kanals (23) in der Drehrichtung des Ballens ist.

6. Ballenpresse nach Anspruch 4 oder 5, **dadurch gekennzeichnet, dass** der Keil durch die Umfangsseite einer konischen oder zylindrischen Rolle ausgebildet wird, welche eine Oberfläche aufweist, welche in dem gleichen Sinn und/oder in der gleichen Geschwindigkeit wie das zusammenarbeitende obere Ende des Ballens läuft, wenn letzterer ausgebildet wird.

7. Ballenpresse nach einem der vorhergehenden Ansprüche, **gekennzeichnet durch** eine Abkratzvorrichtung (22), welche zum Abkratzen beliebigen Erntematerials, welches auf die eine Führungsrolle (19) aufgewickelt oder an die eine Führungsrolle (19) angebracht ist, und zum Zuführen derartigen Materials zu dem Führungsdurchgang (23) angeordnet ist.

8. Ballenpresse nach einem der vorhergehenden Ansprüche, **dadurch gekennzeichnet, dass** ein Beförderungsmittel (22) innerhalb des Endlosbands der Schürze (17) angeordnet ist und dazu dient, abgekratztes Material in einer querverlaufenden Richtung im Allgemeinen parallel zu der Achse der einen Rolle (19) zu führen.

9. Ballenpresse nach Anspruch 8, **dadurch gekennzeichnet, dass** das Beförderungsmittel (22) eine Einzugsschnecke umfasst.

10. Ballenpresse nach Anspruch 9, **dadurch gekennzeichnet, dass** die Einzugsschnecke (22) entlang und im Wesentlichen parallel zu der einen Führungsrolle (19) angeordnet ist und dazu dient, als die Abkratzvorrichtung zu fungieren und ferner das abgekratzte Material in der querverlaufenden Richtung zu führen.

11. Ballenpresse nach Anspruch 6, **dadurch gekennzeichnet, dass** die Rolle eine motorisch betriebene Rolle ist.

12. Ballenpresse nach einem der vorhergehenden Ansprüche, **dadurch gekennzeichnet, dass** das Zuführungsmittel eine Aufnehmvorrichtung (12) zum Aufnehmen von Erntematerial, welches auf dem Boden liegt, umfasst.

13. Ballenpresse nach Anspruch 12, **dadurch gekennzeichnet, dass** das Zuführungsmittel ferner eine drehbare Häckselvorrichtung (13) aufweist.

14. Ballenpresse nach einem der vorhergehenden Ansprüche, **gekennzeichnet durch** mindestens eine Zusammendrückrolle (26), welche benachbart zu dem äußeren Umfang der Ballenformgebungskammer (15) in einem Bereich, welcher umfänglich beabstandet von der Schürze (17) angeordnet ist, und direkt ankoppelbar an den Außenumfang des Ballens, welcher in der Kammer (15) ausgebildet wird, angeordnet ist.

## Revendications

1. Presse à balles (10) pour former une balle cylindrique d'une matière de récolte agricole et comportant :
une chambre de formation de balle (15) :
une entrée d'alimentation (14) vers la chambre (15) ;
des moyens (12, 13) pour alimenter de la matière de récolte vers l'entrée (14) et dans la chambre (15) ;
un tablier (17) formé par au moins une courroie sans fin (18) qui est agencée pour définir une surface de partie cylindrique de la chambre (15) et dans lequel une balle cylindrique peut être formée ;
un trajet de guidage pour la courroie sans fin (18) qui comporte au moins un rouleau de guidage (19) agencé pour être sensiblement protégé de la chambre (15) par la courroie (18), ledit trajet de guidage définissant un espace interne (27) dans lequel de la matière peut s'accumuler ; et
des surfaces latérales opposées (20) pour coopérer avec le tablier (17) pour définir la chambre de formation de balle (15) et chaque surface (20) étant dirigée vers une face d'extrémité circulaire respective de la balle lorsqu'elle est formée ;
**caractérisée en ce qu'**un passage de guidage (23) est agencé pour recevoir de la matière qui s'accumule dans ledit espace interne (27) et pour guider une telle matière dans la chambre de formation de balle (15).

2. Presse à balles selon la revendication 1, **caractérisée en ce que** le passage de guidage est formé par un canal (23) agencé dans l'une des surfaces latérales (20) de la chambre de formation de balle (15).

3. Presse à balles selon la revendication 2, **caractérisée en ce que** le canal (23) a une extrémité d'entrée (24) agencée à l'intérieur du trajet de déplacement suivi par la courroie sans fin (18), et une extrémité de sortie (25) communiquant avec la chambre (15).

4. Presse à balles selon la revendication 3, **caractérisée en ce que** l'extrémité de sortie (25) du canal (23) est en forme de coin de manière à aider la matière qui est tirée dans le canal (23) par la masse rotative de matière située dans la chambre (15).

5. Presse à balles selon la revendication 4, **caractérisée en ce que** la forme de coin de l'extrémité de sortie (25) du canal (23) est dans la direction de rotation de la balle.

6. Presse à balles selon la revendication 4 ou 5, **caractérisée en ce que** le coin est formé par le côté circonférentiel d'un rouleau conique ou cylindrique ayant une surface qui s'étend dans le même sens et/ou à la même vitesse que l'extrémité supérieure coopérante de la balle, lorsque cette dernière est formée.

7. Presse à balles selon l'une quelconque des revendications précédentes, **caractérisée par** un dispositif de raclage (22) agencé pour racler toute matière de récolte qui devient enroulée ou fixée sur ledit un rouleau de guidage (19), et pour alimenter une telle matière vers ledit passage de guidage (23).

8. Presse à balles selon l'une quelconque des revendications précédentes, **caractérisée en ce que** les moyens de transport (22) sont agencés à l'intérieur du trajet sans fin du tablier (17) et sont opérationnels pour alimenter de la matière raclée dans une direction transversale de manière générale parallèle à l'axe dudit un rouleau (19).

9. Presse à balles selon la revendication 8, **caractérisée en ce que** les moyens de transport (22) comportent une vis sans fin.

10. Presse à balles selon la revendication 9, **caractérisée en ce que** la vis sans fin (22) est agencée latéralement et de manière générale parallèlement audit un rouleau de guidage (19) et est opérationnelle pour fonctionner en tant que dispositif de raclage et aussi pour alimenter la matière raclée dans ladite direction transversale.

11. Presse à balles selon la revendication 6, **caractérisée en ce que** ledit rouleau est un rouleau à entraînement mécanique.

12. Presse à balles selon l'une quelconque des revendications précédentes, **caractérisée en ce que** lesdits moyens d'alimentation comportent un dispositif de prélèvement (12) pour prélever une matière de récolte située sur le sol.

13. Presse à balles selon la revendication 12, **caractérisée en ce que** les moyens d'alimentation comportent aussi un dispositif de découpage rotatif (13).

14. Presse à balles selon l'une quelconque des revendications précédentes, **caractérisée par** au moins un rouleau de compression (26) agencé adjacent à la périphérie extérieure de la chambre de formation de balle (15), dans une zone circonférentiellement espacée du tablier (17), et pouvant être directement en contact avec la périphérie extérieure de la balle formée dans la chambre (15).
